(19) Europäisches Patentamt
European Patent Office
Office européen des brevets

(11) EP 4 317 364 A1

(12) # EUROPEAN PATENT APPLICATION
published in accordance with Art. 153(4) EPC

(43) Date of publication:
**07.02.2024 Bulletin 2024/06**

(21) Application number: **22775088.2**

(22) Date of filing: **08.03.2022**

(51) International Patent Classification (IPC):
***C09K 23/56*** *(2022.01)* ***C05G 3/70*** *(2020.01)*

(52) Cooperative Patent Classification (CPC):
**C05G 3/70; C09K 23/56**

(86) International application number:
**PCT/JP2022/010072**

(87) International publication number:
**WO 2022/202296 (29.09.2022 Gazette 2022/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.03.2021 JP 2021048786**

(71) Applicant: **Resonac Corporation**
**Tokyo 105-8518 (JP)**

(72) Inventors:
- **FUJITA, Ichiro**
  **Tokyo 105-8518 (JP)**
- **UCHIDA, Hiroshi**
  **Tokyo 105-8518 (JP)**
- **SAITO, Makoto**
  **Tokyo 105-8518 (JP)**

(74) Representative: **Strehl Schübel-Hopf & Partner**
**Maximilianstrasse 54**
**80538 München (DE)**

(54) **SPREADING AGENT, FERTILIZER COMPOSITION AND AGRICULTURAL CHEMICAL COMPOSITION**

(57) Provided is a spreading agent that has a high water solubility and can effectively enhance the adhesion force of a fertilizer component or an agricultural chemical to a plant. This spreading agent contains at least one oligosaccharide selected from the group consisting of a chitin oligosaccharide, a cello-oligosaccharide and a xylo-oligosaccharide.

EP 4 317 364 A1

## Description

FIELD

The present invention relates to a spreading agent, a fertilizer composition, and an agricultural chemical composition, comprising an oligosaccharide.

BACKGROUND

In agriculture, spreading agents are agents which are added on site when pesticides such as insecticides, fungicides, and herbicides, which are primary agents, are sprayed. A spreading agent is used to improve the physicochemical properties of the primary agent to stabilize or enhance the biological activity thereof.
Surfactants are typical active ingredients of spreading agents. Examples of surfactants include nonionic surfactants alone, nonionic surfactants mixed with anionic surfactants, and nonionic surfactants mixed with cationic surfactants (Non-Patent Literature 1). Examples of surfactants in actual use include nonionic surfactants such as polyoxyethylene alkyl ethers, sorbitan fatty acid esters, and polyether-modified silicones (Patent Literature 1), polyvinyl alcohols (Patent Literature 2), and anionic surfactants such as alkali salts of alkylsulfosuccinic acid and alkali salts of dinaphthylmethanesulfonic acid.
As a pesticide preparation using naturally derived saccharides, an example of blending an anionic polysaccharide containing four types of sugar molecules (glucose, glucuronic acid, glucose, and rhamnose) as repeating basic units in the main chain has been reported (Patent Literature 3).

[CITATION LIST]

[PATENT LITERATURE]

[PTL 1] JP 2000-1404 A
[PTL 2] JP 2015-134704 A
[PTL 3] JP 2011-528674 A

[NON-PATENT LITERATURE]

[NPL 1] Plant Protection, Vol. 68, No. 11, 2014, pp. 60-63

SUMMARY

[TECHNICAL PROBLEM]

However, the spreading agent composition of Patent Literature 1 has low solubility in water, requiring the use of an alcohol solvent. The agricultural liquid spraying agent of Patent Literature 2 has a problem of low solubility in water and precipitation of polyvinyl alcohol when left for long periods of time. In the pesticide preparation of Patent Literature 3, a polysaccharide is used as a thickener, and it is necessary that polyalkoxytriglyceride be blended as a permeation enhancer.
In light of the circumstances described above, an object of the present invention is to provide a spreading agent which is highly soluble in water and which can effectively enhance the adhesion of a fertilizer component or an agricultural chemical to plants.

[SOLUTION TO PROBLEM]

In order to solve the above problems, the present inventors have conducted extensive research and have considered using an oligosaccharide, which is a compound that is highly soluble in water and friendly to the environment and the human body, as a spreading agent.
As a result, it has been discovered that a spreading agent comprising at least one oligosaccharide selected from the group consisting of chitin oligosaccharides, cello-oligosaccharides, and xylo-oligosaccharides exhibits excellent adhesion to plants.
Specifically, the present invention encompasses embodiments [1] to [15] below.

[1] A spreading agent, comprising at least one oligosaccharide selected from the group consisting of chitin oligosaccharides, cello-oligosaccharides, and xylo-oligosaccharides.

[2] The spreading agent according to embodiment [1], comprising a chitin oligosaccharide as the oligosaccharide, wherein the chitin oligosaccharide is a chitin oligosaccharide containing an $\alpha$-1,6-glycosidic bond in at least part of glycosidic bonds.

[3] The spreading agent according to embodiment [2], wherein a ratio of the $\alpha$-1,6-glycosidic bond to all of polymer bonds included in the chitin oligosaccharide is 1 to 50%.

[4] The spreading agent according to embodiment [2] or [3], wherein a number average molecular weight of the chitin oligosaccharide is 420 to 2050.

[5] The spreading agent according to embodiment [1], comprising a cello-oligosaccharide as the oligosaccharide, wherein the cello-oligosaccharide is a cello-oligosaccharide containing an $\alpha$-1,6-glycosidic bond in at least part of glycosidic bonds.

[6] The spreading agent according to embodiment [5], wherein a ratio of the $\alpha$-1,6-glycosidic bond to all of polymer bonds included in the cello-oligosaccharide is 1 to 50%.

[7] The spreading agent according to embodiment [5] or [6], wherein a number average molecular weight of the cello-oligosaccharide is 340 to 1640.

[8] The spreading agent according to any one of embodiments [1] to [7], comprising, as the oligosaccharide, two or more selected from the group consisting of chitin oligosaccharides, cello-oligosaccharides, and xylo-oligosaccharides.

[9] The spreading agent according to embodiment [8], comprising, as the oligosaccharide, a chitin oligosaccharide and a cello-oligosaccharide.

[10] The spreading agent according to embodiment [9], comprising, as the oligosaccharide, a chitin oligosaccharide, a cello-oligosaccharide, and a xylo-oligosaccharide.

[11] The spreading agent according to embodiment [10], wherein as a ratio of each oligosaccharide relative to a total 100 mass% content of the chitin oligosaccharide, the cello-oligosaccharide, and the xylo-oligosaccharide, the chitin oligosaccharide has a ratio of 10 to 50 mass%, the cello-oligosaccharide has a ratio of 10 to 50 mass%, and the xylo-oligosaccharide has a ratio of 10 to 60 mass%.

[12] A fertilizer composition, comprising at least one fertilizer component selected from the group consisting of nitrogen, phosphoric acid, and potassium, and the spreading agent according to any one of embodiments [1] to [11].

[13] The fertilizer composition according to embodiment [12], wherein a total content of the at least one oligosaccharide selected from the group consisting of chitin oligosaccharides, cello-oligosaccharides, and xylo-oligosaccharides is 1 to 15 mass% relative to 100 mass% of the fertilizer composition.

[14] An agricultural chemical composition, comprising at least one agricultural chemical selected from the group consisting of insecticides, acaricides, fungicides, herbicides, plant growth regulators, anti-lodging agents, and plant nutrients, and the spreading agent according to any one of embodiments [1] to [11].

[15] The agricultural chemical composition according to embodiment [14], wherein a total content of the at least one oligosaccharide selected from the group consisting of chitin oligosaccharides, cello-oligosaccharides, and xylo-oligosaccharides is 1 to 15 mass% relative to 100 mass% of the agricultural chemical composition.

[ADVANTAGEOUS EFFECTS OF INVENTION]

The spreading agent of the present invention is highly soluble in water and can effectively enhance the adhesion of fertilizer components or agricultural chemicals to plants.

BRIEF DESCRIPTION OF DRAWINGS

FIG. 1 is a $^1$H-NMR chart of chitin oligosaccharide.

FIG. 2 is a $^1$H-NMR chart of cello-oligosaccharide (1).

FIG. 3 is a $^1$H-NMR chart of cello-oligosaccharide (2).

FIG. 4 shows photographs of the spreadability tests of Comparative Example 1 and Example 5.

DESCRIPTION OF EMBODIMENTS

The embodiments of the present invention will be described below. Note that the embodiments described below show representative examples of the present invention, and the present invention is not limited thereto.

The spreading agent of one embodiment comprises at least one oligosaccharide selected from the group

consisting of chitin oligosaccharides, cello-oligosaccharides, and xylo-oligosaccharides.

[Chitin Oligosaccharides]

Chitin oligosaccharides are oligosaccharides in which several N-acetylglucosamines are linked, and include partially deacetylated chitosan oligosaccharides. Generally, chitin oligosaccharides are obtained by hydrolyzing chitin derived from crustaceans and the like, and are also referred to as oligo-N-acetylglucosamine.

It is preferable that one or a mixture of two or more selected from N-acetylchitobiose, N-acetylchitotriose, N-acetylchitotetraose, N-acetylchitopentaose, N-acetylchitohexaose, N-acetylchitoheptaose, N-acetylchitooctaose be used as the chitin oligosaccharide. Among these, N-acetylchitotriose, N-acetylchitotetraose, and N-acetylchitopentaose are preferable.

The number average molecular weight of the chitin oligosaccharide is preferably 420 to 2050, more preferably 520 to 1650, and further preferably 620 to 1240. When the number average molecular weight is 420 or more, the adhesion of the fertilizer component or pesticide component to plants can be enhanced. When the number average molecular weight is 2050 or less, the solubility of the chitin oligosaccharide in water is higher, and the chitin oligosaccharide is less likely to precipitate. The number average molecular weight of the chitin oligosaccharide can be determined by the method described in Examples below.

The chitin oligosaccharide may also contain a chitin oligosaccharide in which the acetyl groups ($-COCH_3$) of N-acetylglucosamine are partly eliminated to form $NH_2$. The ratio of such deacetylated glucosamine units, relative to the glucosamine units in the entire chitin oligosaccharide, is preferably 30 mol% or less, more preferably 20 mol% or less, and further preferably 15 mol% or less.

The chitin oligosaccharide may be a linear chitin oligosaccharide in which N-acetylglucosamine is linked via β-1,4-glycosidic bonds (hereinafter sometimes referred to as a "linear chitin oligosaccharide"), or may be a branched chitin oligosaccharide containing an α-1,6-glycosidic bond in at least part of glycosidic bonds (hereinafter sometimes referred to as a "branched chitin oligosaccharide").

As the linear chitin oligosaccharide, specifically, one represented by the following formula (1) can be used.

[Chem 1]

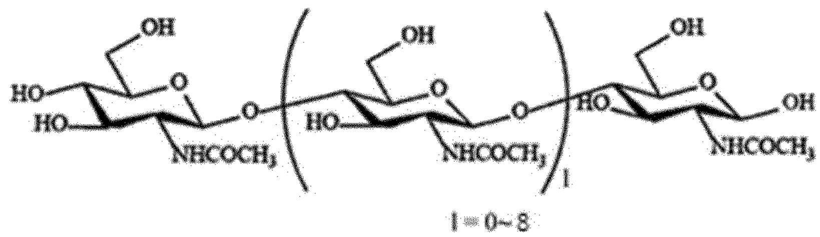

(1)

In the branched chitin oligosaccharide, the position of the α-1,6-glycosidic bond is not particularly limited, and may be branched from the 6-position hydroxy group of any N-acetylglucosamine unit constituting the chitin oligosaccharide. In the branched chitin oligosaccharide, the number of α-1,6-glycosidic bonds is not particularly limited, and may be one or two or more.

When the spreading agent according to an embodiment contains a chitin oligosaccharide, it more preferably contains a branched chitin oligosaccharide. When the spreading agent contains a branched chitin oligosaccharide, the adhesion to plants is further improved. When the spreading agent contains a branched chitin oligosaccharide as the chitin oligosaccharide, the ratio of α-1,6-glycosidic bonds to the total polymer bonds of the chitin oligosaccharide (hereinafter sometimes referred to as the "degree of branching" of the chitin oligosaccharide) is preferably 1 to 50%, more preferably 3 to 40%, further preferably 5 to 30%, and particularly preferably 5 to 20%. As used herein, the term "polymer bonds" refers to bonds connecting monosaccharides to form an oligosaccharide, typically glycosidic bonds. When the degree of branching is 1% or more, the adhesion of the fertilizer component or pesticide component to plants can be enhanced. When the degree of branching is 50% or less, the degradability is reduced and the persistence of the spreading effect can be extended. The degree of branching is determined from the area ratio of the NMR spectrum by the method described in Examples below.

A commercially available product or a manufactured product may be used as the chitin oligosaccharide. The method for producing the chitin oligosaccharide includes a method of chemically or enzymatically partially hydrolyzing chitin. For example, the method described in JP 2012-217396 A can be used. Specifically, the oligosaccharide can be produced by subjecting a reaction solution obtained by hydrolyzing chitin at 5°C to 30°C with 30% or greater concentrated

hydrochloric acid to neutralization and filtration and then desalting the filtrate by electrodialysis and ion exchange resin, followed by lyophilization. When producing a branched chitin oligosaccharide, it is preferable to use the "acid catalyst method" described later.

[Cello-Oligosaccharide]

Cello-oligosaccharides are oligosaccharides in which two or more glucoses are polymerized via β-glycosidic bonds.

It is preferable that one or a mixture of two or more selected from cellobiose, cellotriose, cellotetraose, cellopentaose, cellohexaose, celloheptaose, and cellooctaose be used as the cello-oligosaccharide. Among these, cellotetraose, cellopentaose, and cellohexaose are preferable.

The number average molecular weight of the cello-oligosaccharide is preferably 340 to 1640, more preferably 420 to 1320, and further preferably 500 to 990. When the number average molecular weight is 340 or more, the adhesion of the fertilizer component or pesticide component to plants can be enhanced. When the number average molecular weight is 1640 or less, the solubility of the cello-oligosaccharide in water is higher, and the cello-oligosaccharide is less likely to precipitate. The number average molecular weight of the cello-oligosaccharide can be determined by the method described in Examples below.

The cello-oligosaccharide may be a linear cello-oligosaccharide in which glucose is linked via β-1,4-glycosidic bonds (hereinafter sometimes referred to as a "linear cello-oligosaccharide"), or may be a branched cello-oligosaccharide containing an α-1,6-glycosidic bond in at least part of glycosidic bonds (hereinafter sometimes referred to as a "branched cello-oligosaccharide").

As the linear cello-oligosaccharide, specifically, one represented by the following formula (2) can be used.

[Chem 2]

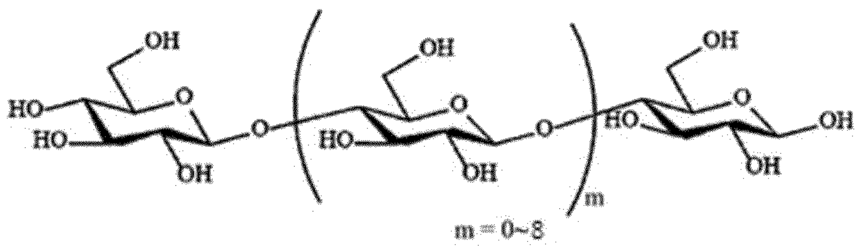

(2)

In the branched cello-oligosaccharide, the position of the α-1,6-glycosidic bond is not particularly limited, and may be branched from the 6-position hydroxy group of any glucose unit constituting the cello-oligosaccharide. In the branched cello-oligosaccharide, the number of α-1,6-glycosidic bonds is not particularly limited, and may be one or two or more.

When the spreading agent according to an embodiment contains a cello-oligosaccharide, it more preferably contains a branched cello-oligosaccharide. When the spreading agent contains a branched cello-oligosaccharide, the adhesion to plants is further improved. When the spreading agent contains a branched cello-oligosaccharide as the cello-oligosaccharide, the ratio of α-1,6-glycosidic bonds to the total polymer bonds of the cello-oligosaccharide (hereinafter sometimes referred to as the "degree of branching" of the cello-oligosaccharide) is preferably 1 to 50%, more preferably 3 to 40%, further preferably 5 to 30%, and particularly preferably 5 to 20%. When the degree of branching is 1% or more, the adhesion of the fertilizer component or pesticide component to plants can be enhanced. When the degree of branching is 50% or less, the degradability is reduced and the persistence of the spreading effect can be extended. The degree of branching is determined from the area ratio of the NMR spectrum by the method described in Examples below.

A commercially available product or a manufactured product may be used as the cello-oligosaccharide. The method for producing the cello-oligosaccharide includes a method of chemically or enzymatically partially hydrolyzing cellulose. For example, the cello-oligosaccharide can be produced by a hydrolysis reaction of plant biomass using a carbon catalyst, as described in WO 2017/104687. When producing a branched cello-oligosaccharide, it is preferable to use the "acid catalyst method" described later.

[Xylo-Oligosaccharide]

Xylo-oligosaccharides are oligosaccharides in which multiple xyloses are polymerized via β-glycosidic bonds. Generally, xylo-oligosaccharides are obtained by hydrolysis of xylan, which is the main component of hemicellulose.

It is preferable that one or a mixture of two or more selected from xylobiose, xylotriose, xylotetraose, xylopentaose, xylohexaose, xyloheptaose, and xylooctaose be used as the xylo-oligosaccharide. Among these, xylopentaose, xylohexaose, and xyloheptaose are preferable.

As the xylo-oligosaccharide, specifically, one represented by the following formula (3) can be used.

[Chem 3]

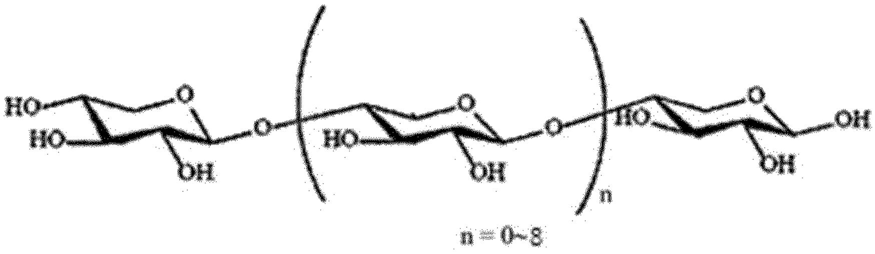

n = 0~8

(3)

A commercially available product or a manufactured product may be used as the xylo-oligosaccharide. The method for producing the xylo-oligosaccharide includes a method of chemically or enzymatically partially hydrolyzing xylan. For example, the xylo-oligosaccharide can be produced by hydrolyzing corncobs with a culture supernatant of Acremonium cellulolyticus, where xylan hydrolase has been produced.

[Method for Production of Branched Oligosaccharide]

As the method for producing the above branched chitin oligosaccharide or branched cello-oligosaccharide, it is preferable to use an acid catalyst method in which a polysaccharide is hydrolyzed in the presence of an acid catalyst.

When producing a chitin oligosaccharide, chitin is used as the starting polysaccharide. When producing a cello-oligosaccharide, cellulose may be used as the starting polysaccharide, or a mixture of cellulose and xylan may be used. When using a mixture of cellulose and xylan as a raw material, the content of xylan, relative to the total content of 100 mass% of the cellulose and xylan, is preferably 5 to 50 mass%, more preferably 7 to 40 mass%, further preferably 10 to 30 mass%, and particularly preferably 15 to 25 mass%.

A conventionally known acid can be used as the acid catalyst. Specifically, at least one acid selected from the group consisting of sulfuric acid, sulfurous acid, hydrochloric acid, perchloric acid, nitric acid, nitrous acid, and phosphoric acid, or a partially neutralized salt thereof can be used. Examples of partially neutralized salts of acids include monopotassium dihydrogen phosphate, monoammonium dihydrogen phosphate, and potassium hydrogen sulfate. The acid catalyst is preferably phosphoric acid or a partially neutralized salt thereof, more preferably phosphoric acid.

The amount of the acid catalyst used is preferably such that the mass ratio of the polysaccharide to the acid catalyst is (polysaccharide) / (acid catalyst) = 2 to 100, more preferably (polysaccharide) / (acid catalyst) = 4 to 20, and further preferably (polysaccharide) / (acid catalyst) = 3 to 10. When the mass ratio of the polysaccharide to the acid catalyst is 100 or less, hydrolysis proceeds at a practically acceptable rate. When the mass ratio of the polysaccharide to the acid catalyst is 2 or more, side reactions such as a dehydration reaction and carbon-carbon bond cleavage during hydrolysis can be suppressed.

The mass of the polysaccharide referred to herein is true mass (dry mass) excluding water contained in the raw material. Since polysaccharides usually contain physically adsorbed water, the amount of water adhering to them is analyzed, and the mass ratio of the polysaccharide to the acid catalyst is obtained from the mass of the polysaccharide after removing the water. As a method for analyzing the amount of adhering water, a method of quantifying the polysaccharide used as a raw material by placing it in a constant temperature dryer at 100°C to 150°C and drying until there is no decrease in mass can be adopted. In order to prevent the effects of side reactions such as a dehydration reaction during drying, it is more desirable to dry at a lower temperature using a vacuum dryer and thereafter quantify. The mass of the acid catalyst is also the true mass (dry mass) of the acid catalyst.

As described above, polysaccharides before hydrolysis already contain about 1 to 12 mass% of physically adsorbed water. In addition, acid catalysts such as hydrochloric acid and phosphoric acid in common commercial forms

often contain water. Thus, even without adding water, hydrolysis can proceed using the water physically adsorbed to the polysaccharide and the water contained in the acid catalyst. In many cases, the amount of water is sufficient without the need to add further water, but for highly dry polysaccharides, hydrolysis can be performed by adding water.

Whether water is added or not, the polysaccharide contains about 1 to 12 mass% of physically adsorbed water. Thus, the water content in the hydrolysis reaction, including the water content physically adsorbed by the polysaccharide and the water content in the acid catalyst, as well as the water content when water is added, is preferably 0.1 parts by mass to 15 parts by mass, and more preferably 0.5 parts by mass to 8 parts by mass relative to 100 parts by mass of the true polysaccharide mass (dry mass). When it is 15 parts by mass or less, a sufficient hydrolysis rate can be obtained, and inoperability due to sticking to equipment or the like can be prevented. Furthermore, when it is 0.1 parts by mass or more, side reactions such as a dehydration reaction can be suppressed.

When performing hydrolysis, it is preferable to apply an external mechanical force to the polysaccharide by pulverization. Examples of the pulverization device used for pulverizing include tumbling ball mills such as pot mills, tube mills, and conical mills; jet pulverizers such as swirling jet mills, impingement jet mills, fluidized bed jet mills, and wet jet mills; shearing mills such as mortar mills (grinders), *ONGU* mill; colloid mills such as mortars and stone mills; impact pulverizers such as hammer mills, cage mills, pin mills, disintegrators, screen mills, turbo mills, and centrifugal classification mills; vibrating mills which vibrate a drum to move media therein for pulverization; stirring mills in which media and raw materials are placed in a can body having stirring blades and are rotated for pulverization; and planetary ball mills, which are a type of pulverizer which employs rotational and orbital motion.

The pulverization device is preferably a ball mill, vibrating mill, or stirring mill, in which the polysaccharide is subjected to strong compressive forces and tensile stresses in both directions of the main chain. The pulverization device is more preferably a planetary ball mill, a tumbling ball mill, a vibrating mill, or a stirring mill, and further preferably a planetary ball mill or a vibrating mill.

The pulverization process can be carried out continuously or intermittently. In order to suppress increases in temperature of the object to be processed due to the pulverization process, it is preferable to perform the pulverization process intermittently. The pulverization process can be performed intermittently, although the optimum value varies greatly, depending on the pulverization device, for example, in the case of a planetary ball mill, by repeating a cycle with an interval of 5 to 15 minutes every time pulverization is performed for 5 to 15 minutes. When the pulverization process is performed continuously, it is preferable to perform the pulverization process while maintaining an appropriate temperature by cooling the pulverization device with a jacket or the like.

When hydrolysis is performed without pulverization, methods which do not involve pulverization include a method of kneading using a pressure kneader and a method of reacting using an extruder after kneading with a kneader.

The hydrolysis temperature is preferably room temperature to 110°C, and more preferably 50°C to 100°C. When the temperature is room temperature or above, the progression of decomposition is not reduced, and the time required for decomposition does not become excessively long. Hydrolysis can also be carried out at increased temperatures to further accelerate the rate of decomposition. When the hydrolysis temperature is 110°C or lower, side reactions such as a dehydration reaction can be suppressed. Since shear heat generation may be large, depending on the reactor, it is preferable to repeat the cycle in intervals as described above, or to control the hydrolysis temperature by flowing cooling water through the jacket of the reactor.

Though the hydrolysis time depends on the reactor used, in general, it is preferably 2 hours to 150 hours, more preferably 5 hours to 80 hours, further preferably 10 hours to 60 hours, and particularly preferably 15 hours to 40 hours. When the hydrolysis time is 2 hours or longer, the decomposition of the polysaccharide will be accelerated. When the hydrolysis time is 150 hours or less, the hydrolysate can be obtained more efficiently. When hydrolysis is performed by the pulverization process and the pulverization process is performed intermittently, the hydrolysis time means the net pulverization time excluding the intervals.

After the above hydrolysis reaction, if necessary, a step of adding water to the reaction product to extract water-soluble components may be performed. When the amount of water used during hydrolysis is small, the reaction product is in a solid state, and it is preferable to perform an extraction step.

After the above hydrolysis reaction, if necessary, a step of adding a basic compound to neutralize the reaction product may be performed. Since the acid catalyst used for hydrolysis remains in the reaction product obtained by the above hydrolysis reaction, the acid catalyst can be neutralized by adding a basic compound. The basic compound used for neutralization is preferably at least one selected from the group consisting of potassium salts, phosphates, ammonium salts, and ammonia. When a neutralization step is performed, it is preferable to separate the solid content by filtration after the neutralization reaction, since precipitate may be deposited when the pH is brought to the neutral side.

The oligosaccharide produced by the acid catalyst method in this manner has a higher degree of branching, as compared to a production method using a carbon catalyst, as described in WO 2017/104687. Thus, the acid catalyst method is preferable as the method for producing the branched chitin oligosaccharide or branched cello-oligosaccharide.

[Composition of Spreading Agent]

The spreading agent according to an embodiment comprises at least one oligosaccharide selected from the group consisting of chitin oligosaccharides, cello-oligosaccharides, and xylo-oligosaccharides, and preferably comprises two or more of these oligosaccharides. When the spreading agent comprises two or more oligosaccharides, a synergistic effect of further improving the adhesion to plants is obtained, as compared to when the same amount of a single oligosaccharide is contained. This synergistic effect is brought about presumably because the two or more oligosaccharides contained therein complement each other in the ability to disperse in a pesticide or fertilizer and the ability to spread on leaves, which differ, depending on oligosaccharides.
When the spreading agent comprises two oligosaccharides, the combination is not limited and may be any combination of a chitin oligosaccharide and a cello-oligosaccharide, a chitin oligosaccharide and a xylo-oligosaccharide, or a cello-oligosaccharide and a xylo-oligosaccharide. Among these, a combination of a chitin oligosaccharide and a cello-oligosaccharide is more preferable.
When the spreading agent comprises two types; a chitin oligosaccharide and a cello-oligosaccharide, the chitin oligosaccharide preferably contains a branched chitin oligosaccharide, and the cello-oligosaccharide preferably contains a branched cello-oligosaccharide.
When the spreading agent comprises two types; a chitin oligosaccharide and a cello-oligosaccharide, the mass ratio of the chitin oligosaccharide to the cello-oligosaccharide (the content of chitin oligosaccharide / the content of cello-oligosaccharide) is preferably 0.2 to 5, more preferably 0.3 to 3, and further preferably 0.5 to 1.5.
It is particularly preferable that the spreading agent comprise three oligosaccharides; a chitin oligosaccharide, a cello-oligosaccharide, and a xylo-oligosaccharide. When the spreading agent comprises three types; a chitin oligosaccharide, a cello-oligosaccharide, and a xylo-oligosaccharide, the above synergistic effect is remarkable, and the adhesion to plants is particularly excellent.
When the spreading agent comprises a chitin oligosaccharide, a cello-oligosaccharide, and a xylo-oligosaccharide, the chitin oligosaccharide preferably contains a branched chitin oligosaccharide, and the cello-oligosaccharide preferably contains a branched cello-oligosaccharide.
When the spreading agent comprises a chitin oligosaccharide, a cello-oligosaccharide, and a xylo-oligosaccharide, as the ratio of each oligosaccharide relative to the total 100 mass% content of the chitin oligosaccharide, the cello-oligosaccharide and the xylo-oligosaccharide, it is preferable that the chitin oligosaccharide have a ratio of 10 to 50 mass%, the cello-oligosaccharide have a ratio of 10 to 50 mass%, and the xylo-oligosaccharide have a ratio of 10 to 60 mass%. As the ratio of each oligosaccharide, it is more preferable that the chitin oligosaccharide have a ratio of 20 to 40 mass%, the cello-oligosaccharide have a ratio of 20 to 40 mass%, and the xylo-oligosaccharide have a ratio of 20 to 55 mass%.

[Application to Plants]

The spreading agent according to an embodiment is preferably added to a fertilizer composition or an agricultural chemical composition (hereinafter sometimes referred to as a "spreading agent composition"), which are described later, and applied to plants. The spreading agent composition is preferably applied to the foliage, tree body, fruit surface, or seed of a plant, or soil that particularly requires a spreading effect, and more preferably to the foliage of the plant.
The target plants for application are not particularly limited, but are typically agricultural crops, and include plants such as *Brassicaceae, Solanaceae, Asteraceae, Cucurbitaceae, Chenopodiaceae, Umbelliferae, Leguminosae, Convolvulaceae, Liliaceae, Rosaceae, Malvaceae, Zingiberaceae, Nelumbonaceae,* and *Gramineae*.
Specific examples include *Brassicaceae* plants such as Chinese cabbage, cabbage, broccoli, cauliflower vegetables, Japanese mustard spinach, Japanese mustard greens, radish, and turnip, *Solanaceae* plants such as potatoes, tomatoes, eggplants, peppers, hot peppers, green peppers, and tobacco, *Asteraceae* plants such as crown daisy, lettuce, leaf lettuce, burdock, and butterbur, *Cucurbitaceae* plants such as watermelons, melons, pumpkins, cucumbers, bitter melons, loofahs, and gourds, *Chenopodiaceae* plants such as spinach, chard, Swiss chard, saltwort, and beet, *Umbelliferae* plants such as carrots, celery, parsley, and East Asian wildparsley, *Leguminosae* plants such as soybeans (edamame), adzuki beans, kidney beans, broad beans, peas, winged beans, and peanuts, *Convolvulaceae* plants such as sweet potato and water spinach, *Liliaceae* plants such as Chinese chives, green onions, onions, garlic, and asparagus, *Rosaceae* plants such as strawberries, apples, pears, and loquats, *Malvaceae* plants such as okra and cotton, *Zingiberaceae* plants such as ginger, *Nelumbonaceae* plants such as lotus, and *Gramineae* plants such as corn, rice, barley, wheat, and sugarcane.
Among the foregoing, Chinese cabbage, cabbage, Japanese mustard spinach, and spinach, which are water-repellent leafy vegetables, are more preferable.
The spreading agent composition is preferably applied to plants at a concentration such that the total content of the at least one oligosaccharide selected from the group consisting of chitin oligosaccharides, cello-oligosaccharides,

and xylo-oligosaccharides is 20 to 500 ppm by mass, more preferably 50 to 150 ppm by mass. When the concentration is 20 ppm by mass or more, sufficient adhesion to plants can be exhibited. When the concentration is 500 ppm by mass or less, cost due to excessive use of the spreading agent can be reduced.

[Fertilizer Composition]

A fertilizer composition according to an embodiment comprises at least one fertilizer component selected from the group consisting of nitrogen, phosphoric acid, and potassium, and this spreading agent. It is more preferable that the fertilizer component comprise all three of nitrogen, phosphoric acid, and potassium.

In the fertilizer composition, the total content of the at least one oligosaccharide selected from the group consisting of chitin oligosaccharides, cello-oligosaccharides, and xylo-oligosaccharides is preferably 1 to 15 mass%, more preferably 3 to 12 mass%, and further preferably 5 to 10 mass%.

The fertilizer composition may contain other ingredients that are effective as fertilizers. Examples of other ingredients include essential elements such as calcium (Ca), magnesium (Mg), sulfur (S), iron (Fe), manganese (Mn), boron (B), zinc (Zn), nickel (Ni), molybdenum (Mo), copper (Cu), and chlorine (Cl); and useful elements such as sodium (Na), silicon (Si), selenium (Se), cobalt (Co), aluminum (Al), and vanadium (V), which are elements that help plants grow.

As magnesium raw materials, for example, magnesium nitrate, magnesium phosphate, magnesium chloride, and magnesium sulfate can be used. As iron raw materials, for example, iron sulfate, iron chloride, and iron nitrate can be used. As manganese raw materials, for example, manganese nitrate, manganese phosphate, manganese chloride, and manganese sulfate can be used. As boron raw materials, for example, borax, boric acid, or metal salts thereof can be used. As zinc raw materials, for example, zinc sulfate, zinc chloride, and zinc nitrate can be used. As molybdenum raw materials, for example, sodium molybdate and ammonium molybdate can be used. As copper raw materials, for example, copper sulfate, copper chloride, and copper nitrate can be used.

[Agricultural Chemical Composition]

An agricultural chemical composition according to an embodiment comprises at least one agricultural chemical selected from the group consisting of insecticides, acaricides, fungicides, herbicides, plant growth regulators, anti-lodging agents, and plant nutrients, and this spreading agent.

In the agricultural chemical composition, the total content of the at least one oligosaccharide selected from the group consisting of chitin oligosaccharides, cello-oligosaccharides, and xylo-oligosaccharides is preferably 1 to 15 mass%, more preferably 3 to 12 mass%, and further preferably 5 to 10 mass%.

EXAMPLES

The present invention will be described in more detail below, based on the Examples, but is not limited to these Examples.

<Preparation of Oligosaccharide>

Each oligosaccharide used in the Examples and Comparative Examples was prepared as follows.

[Chitin Oligosaccharide]

3.83 kg of chitin (manufactured by FUJIFILM Wako Pure Chemical Corporation; purified chitin) was mixed with 0.54 kg of a phosphoric acid 85% aqueous solution (manufactured by FUJIFILM Wako Pure Chemical Corporation; special grade reagent) using a Henschel mixer (device name: FM20C/I, manufactured by Nippon Coke & Engineering Co., Ltd.). The mixing conditions were a rotation speed of 1400 rpm and 0.4 $m^3$/hr of ventilation.

This mixture was transferred to a vibrating mill (device name: MB-1 type, manufactured by Chuo Kakohki Co., Ltd.) and hydrolyzed while pulverizing at 75°C for 72 hours. The pulverization conditions were a total amplitude of 8 mm, a frequency of 16.2 Hz, and φ3/4-inch carbon steel balls.

This pulverized material was removed from the vibrating mill and separated from the balls, and 641 g of the pulverized material was transferred to a dissolving device (10 L container). 5771 g of ion-exchanged water was added thereto, and the mixture was agitated at 25°C for 1 hour using a Three-One Motor™. The water-soluble components were dissolved in this manner to obtain an extract of the hydrolysate.

114 g of a potassium hydroxide 48% aqueous solution was added to this extract, and the mixture was agitated at 25°C for 1 hour using a Three-One Motor. 262 g of Perlite #31 (manufactured by Showa Chemical Industry Co., Ltd.) was added as a filtration aid, and filtration was performed using a pressure filter (KST-293-20, manufactured by Advantec

Toyo Kaisha, Ltd.) to obtain 5289 g of filtrate.

Analysis of the filtrate revealed that it had a pH of 6.8 and contained 404 g of chitin hydrolysate.

Next, the filtrate was lyophilized to obtain a chitin oligosaccharide powder.

[Cello-Oligosaccharide (1)]

Cellulose Arbocel B600 (manufactured by Rettenmaier) was used as a raw material. As a result of analyzing the Cellulose Arbocel B600, the cellulose content was 80 mass% and the xylan content was 20 mass%.

3.79 kg of the above raw material (water content 3.4 mass%, dry mass 3.66 kg) was mixed with 0.53 kg of a phosphoric acid 85% aqueous solution (manufactured by FUJIFILM Wako Pure Chemical Corporation; special grade reagent) using a Henschel mixer (device name: FM20C/I, manufactured by Nippon Coke & Engineering Co., Ltd.). The mixing conditions were a rotation speed of 1400 rpm and 0.4 $m^3$/hr of ventilation.

350 g of this mixture was transferred to a vibrating mill (device name: MB-1 type, manufactured by Chuo Kakohki Co., Ltd.) and hydrolyzed while pulverizing at 75°C for 72 hours. The pulverization conditions were a total amplitude of 8 mm, a frequency of 16.2 Hz, and φ3/4-inch carbon steel balls.

This pulverized material was removed from the vibrating mill and separated from the balls, and 300 g of the pulverized material was transferred to a dissolving device (5 L container). 2817 g of ion-exchanged water was added thereto, and the mixture was agitated at 25°C for 1 hour using a Three-One Motor™. The water-soluble components were dissolved in this manner to obtain an extract of the hydrolysate.

To this extract, 61 g of a potassium hydroxide 48% aqueous solution was added, and the mixture was agitated at 25°C for 1 hour using a Three-One Motor. 122 g of Perlite #31 (manufactured by Showa Chemical Industry Co., Ltd.) was added as a filtration aid, and filtration was performed using a pressure filter (KST-293-20, manufactured by Advantec Toyo Kaisha, Ltd.) to obtain 2533 g of filtrate.

Analysis of the filtrate revealed that it had a pH of 6.8 and contained 167 g of cellulose hydrolysate and 42 g of xylan hydrolysate.

Next, the filtrate was lyophilized to obtain a cello-oligosaccharide powder. The xylan hydrolysate contained in the filtrate was lyophilized without separation.

[Cello-Oligosaccharide (2)]

10 g of Avicel (crystalline fine powder cellulose manufactured by Merck) and 1.5 g of activated carbon BA50 (manufactured by Ajinomoto Fine-Techno Co., Inc.) were placed in a ceramic pot mill having a capacity of 3600 mL together with 2000 g of alumina balls having a diameter of 1.5 cm, mounted on a pot mill rotating table (manufactured by Nitto Kagaku Co., Ltd. Pot Mill Rotating Table ANZ-51S), and treated at 60 rpm for 48 hours. Note that regarding the temperature, the processing was started at room temperature, and the temperature rise due to shear heating was left to chance.

Next, 0.374 g of the reaction raw material and 40 mL of water were placed in a high-pressure reactor (inner volume: 100 mL, autoclave manufactured by OM Labotech Co., Ltd., made of Hastelloy C22), then heated to 230°C at a rate of 10 to 30°C/min (average temperature increase rate of 11.3°C/min) to the reaction temperature while stirring at 600 rpm, at which point heating was immediately stopped, and the reactor was air-cooled at a rate of 10 to 30°C/min (average cooling rate of 16.7°C/min) to prepare a reaction solution.

Subsequently, the supernatant liquid recovered from the reaction solution by a centrifugal separator was lyophilized to obtain a cello-oligosaccharide powder.

[Xylo-Oligosaccharide]

*Acremonium Cellulolyticus* strain TN (FERM P-18508) was shake-cultured in a 500 mL flask containing 100 mL of liquid medium (Avicel: 50 g/L, $KH_2O_4$: 24 g/L, ammonium sulfate: 5 g/L, potassium tartrate $1/2H_2O$: 4.7 g/L, urea: 4 g/L, Tween 80: 1 g/L, $MgSO_4{\cdot}7H_2O$: 1.2 g/L, $ZnSO_4{\cdot}7H_2O$: 10 mg/L, $MnSO_4{\cdot}5H_2O$: 10 mg/L, and $CuSO_4{\cdot}5H_2O$:10 mg/L) at 30°C for 6 days. 5 g of corncob powder was suspended in 50 mL of the supernatant obtained after centrifugation of the culture solution, and the mixture was agitated at 50°C for 72 hours to react. The centrifugation supernatant of the resulting reaction solution was lyophilized to obtain a xylo-oligosaccharide powder.

For the chitin oligosaccharide, cello-oligosaccharide (1), and cello-oligosaccharide (2) prepared by the above methods, the number average molecular weight and the degree of branching were obtained by the following methods.

[Number Average Molecular Weight Analysis Method]

The number average molecular weight was determined by GPC (gel permeation chromatography) analysis

using an HPLC (high performance liquid chromatogram) apparatus.

Each standard sample prepared under the conditions shown in Table 1 was subjected to ultrasonic irradiation for 5 minutes, dispersed and dissolved, allowed to stand overnight, and then filtered through a 0.45 μm PTFE membrane filter (model number: 25HP045AN, manufactured by Advantec Toyo Kaisha, Ltd.) to prepare a standard sample. "Standard 1" and "Standard 2" were used for analysis of the chitin oligosaccharide, and separately, "Standard 1" and "Standard 3" were used for analysis of the cello-oligosaccharide (1) and cello-oligosaccharide (2). In Table 1, "Mp" represents the peak top molecular weight.

Analysis samples were prepared by dissolving 0.050 g of each oligosaccharide powder in 1 g of water in the same manner as the standard sample.

Table 1

| Standard Sample Name | Dissolved sample | Dissolved mass in 1 g of water (g) |
|---|---|---|
| Standard 1 | PULLULAN STD-P-5 (Mp = 5900) (manufactured by Showa Denko K.K.) | 0.010 |
| Standard 2 | PULLULAN STD-P-10 (Mp = 9600) (manufactured by Showa Denko K.K.) | 0.010 |
| | Chitin oligosaccharide (Mp = 1439, 1236, 1033, 830, 627, 424, 221) (manufactured bv Tokyo Chemical Industry Co., Ltd.) | 0.070 |
| Standard 3 | PULLULAN STD-P-10 (Mp = 9600) (manufactured by Showa Denko K.K.) | 0.010 |
| | Glucose (Mp = 180) (manufactured by Sigma-Aldrich) | 0.010 |
| | Cellobiose (Mp = 342) (manufactured by Sigma-Aldrich) | 0.010 |
| | Cellotriose (Mp = 504) (manufactured by Sigma-Aldrich) | 0.010 |
| | Cellotetraose (Mp = 666) (manufactured by Sigma-Aldrich) | 0.010 |
| | Cellopentaose (Mp = 828) (manufactured by Sigma-Aldrich) | 0.010 |

Using a GPC-LS (manufactured by Agilent, 1260 Infinity) as an analyzer, measurements were made under the following analysis conditions to determine the number average molecular weight of all peaks of each analysis sample.

(Analysis Conditions)

Column: Shodex™ SB-G 6B (guard column) + SB802.5HQ (analysis column) × 3
Column temperature: 40°C
Eluent: 30 v/v% acetonitrile + 70 v/v% water 0.2M acetic acid aqueous solution
Flow rate: 0.5 mL/min
Injection volume: 20 μL
Detector: differential refractometer (RI)

[Degree of Branching Analysis Method]

The degree of branching was determined using an NMR (nuclear magnetic resonance) apparatus under the conditions shown below.

(NMR conditions)

Apparatus: Bruker AVANCE 500 (500 MHz)
Measurement method: $^{1}$H-NMR, $^{13}$C-NMR, $^{13}$C-DEPT135, HSQC
Lock solvent: $D_2O$

Internal standard: TSP-$d_4$ (sodium trimethylsilylpropionate) = 0 ppm
Temperature: room temperature
Sample preparation: powder sample (50 mg) / $D_2O$ (1 mL) + TSP-$d_4$ (5 mg)

Measurement samples were prepared by the following method. 50 mg of a powder sample was accurately weighed, dissolved by adding 1 mL of $D_2O$ thereto in a 50 mL sample bottle, shaken with an ultrasonic cleaner for 5 minutes, dried in a vacuum dryer (30°C), and again accurately weighed to calculate the dehydrated content. TSP-$d_4$ (5 mg) and $D_2O$ (1 mL) were added again, and after shaking with an ultrasonic cleaner for 5 minutes, the sample was filtered through a 0.45 μm disposable filter (model number: 25HP045AN, manufactured by Advantec Toyo Kaisha, Ltd.), sealed in a 5 mmφ NMR sample tube, and subjected to NMR measurement immediately after sampling.

The degree of branching was calculated by the following formula based on the spectral area ratios of "α-1,6-H1" and "β-1,4-H1" shown in Table 2.

$$\text{Degree of branching} = (\alpha\text{-1,6-H1}) / [(\alpha\text{-1,6-H1}) + (\beta\text{-1,4-H1})] \times 100\ (\%)$$

[Table 2]

| | Chitin oligosaccharide | Cello-oligosaccharide (1)<br>Cello-oligosaccharide (2) |
|---|---|---|
| α-1,6-H1 | 5.3 to 5.5 ppm | 4.9 to 5.0 ppm |
| β-1,4-H1 | 4.4 to 4.6 ppm | 4.4 to 4.6 ppm |

FIG. 1 shows the $^1$H-NMR chart of the chitin oligosaccharide, FIG. 2 shows the $^1$H-NMR chart of the cello-oligosaccharide (1), and FIG. 3 shows the $^1$H-NMR chart of the cello-oligosaccharide (2).

Table 3 shows the analysis results. From these results, it could be understood that the chitin oligosaccharide and the cello-oligosaccharide (1) contained branched oligosaccharides, and the cello-oligosaccharide (2) was a straight-chain oligosaccharide which did not contain branched forms.

[Table 3]

| | Number average molecular weight | Degree of branching |
|---|---|---|
| Chitin oligosaccharide | 810 | 10% |
| Cello-oligosaccharide (1) | 800 | 14% |
| Cello-oligosaccharide (2) | 780 | 0% |

<Production of Fertilizer Composition>

[Example 1]

A fertilizer component and the chitin oligosaccharide obtained by the method described above were dissolved in water to prepare a fertilizer composition containing 8.1 mass% of the fertilizer component (total of $P_2O_5$ and $K_2O$) and 8.0 mass% of the chitin oligosaccharide.

[Examples 2 to 8]

Fertilizer compositions were produced in the same manner as in Example 1, except that the types and contents of the oligosaccharides were changed as shown in Table 4.

[Comparative Example 1]

A fertilizer composition containing 8.1 mass% of the fertilizer component (total of $P_2O_5$ and $K_2O$) was prepared by dissolving only the fertilizer component in water.

<Spreadability Test>

Leaf samples were prepared by cutting spinach and cabbage leaves into 2 cm × 3 cm pieces. Spinach is a leafy vegetable with general water repellency, and cabbage is a leafy vegetable with high water repellency.

The prepared fertilizer compositions of Examples 1 to 8 and Comparative Example 1 were each diluted 1000-fold with water, and 50 mL was put into a 100 mL glass bottle (hereinafter referred to as a "treatment liquid"). A leaf sample was picked up with tweezers, vertically immersed in the treatment liquid, held in the vertically immersed state for 3 seconds, and then slowly withdrawn.

The immersed leaf sample was placed on a flat desk with the leaf surface facing up, and the degree of wetness on the surface was visually observed and photographed.

Table 4 shows the results of evaluating the spreading effect of each treatment liquid based on the following criteria. Photographs of Comparative Example 1, and Example 5, which gave the best results, are shown in FIG. 4.

(Evaluation criteria)

A: Many water droplets adhered over the entire surface.
B: Water droplets adhered over the entire surface.
C: Water droplets over almost the entire surface.
D: Water droplets adhered.
E: Water droplets adhered slightly.
F: Substantially no adhesion.

[Table 4]

| | Fertilizer composition before dilution (mass%) | | | | | Spreadability test results | |
|---|---|---|---|---|---|---|---|
| | Fertilizer component ($P_2O_5$ + $K_2O$) | Chitin oligosaccharide | Cello-oligosaccharide (1) | Cello-oligosaccharide (2) | Xylo-oligosaccharide | Spinach | Cabbage |
| Comp Ex 1 | 8.1 | - | - | - | - | F | F |
| Ex 1 | 8.1 | 8.0 | - | - | - | C | D |
| Ex 2 | 8.1 | - | 8.0 | - | - | C | D |
| Ex 3 | 8.1 | - | - | 8.0 | - | D | E |
| Ex 4 | 8.1 | - | - | - | 8.0 | D | D |
| Ex 5 | 8.1 | 2.0 | 2.0 | - | 4.0 | A | A |
| Ex 6 | 8.1 | 2.0 | - | - | - | D | D |
| Ex 7 | 8.1 | 2.0 | 2.0 | - | - | C | C |
| Ex 8 | 8.1 | 2.0 | - | 2.0 | - | D | D |

From the results in Table 4, in comparison with Comparative Example 1, in which an oligosaccharide was not added, in Examples 1 to 8, in which oligosaccharide was added, the spreading effect on the leaf surface was confirmed.
Comparing the results of Examples 1 to 4 each comprising 8.0 mass% of a single oligosaccharide added thereto, the spreading effect of Examples 1 and 2 containing highly branched oligosaccharides was high. When the results of Examples 2 and 3 were compared, Example 2 comprising the cello-oligosaccharide (1) exhibited a higher spreading effect than Example 3 comprising the cello-oligosaccharide (2). From the foregoing, it could be understood that the spreading effect is higher when an oligosaccharide having a high degree of branching is used.
From the results of Examples 1 to 4 and Example 5, it could be understood that even if the amount of oligosaccharide added is the same, the spreading effect can be significantly improved by mixing a plurality of oligosaccharides rather than using a single oligosaccharide, and a synergistic effect can be obtained.
From the results of Examples 6 to 8, it could be confirmed that even if the amount of the oligosaccharide added is reduced below 8.0 mass%, the spreading effect can be obtained.
Comparing the results of Examples 7 and 8 comprising two types; a chitin oligosaccharide and a cello-oligosaccharide added thereto, Example 7 comprising the cello-oligosaccharide (1) had a greater spreading effect than Example 8 comprising the cello-oligosaccharide (2). From this, it could be confirmed that the spreading effect is greater when an oligosaccharide having a high degree of branching is used.

<Storage Stability Test>

The lyophilized powders of the chitin oligosaccharide and cello-oligosaccharide (1) produced by the above methods were each dissolved in water so that the sugar concentration (the concentration of cello-oligosaccharide (1) includes xylan hydrolyzate) was 5 mass% to prepare a sample solution. Immediately after preparation and after storage for 7 days, the presence or absence of turbidness in the sample solutions was observed and the turbidity was measured. The results are shown in Table 5.
The sample solutions were stored by filling 40 mL of the sample solutions into 50 mL containers and allowing them to stand in a constant temperature bath set to 30°C.
The following method was used to measure turbidity. A well-dispersed sample solution (Sample 1) and a sample solution (Sample 2) obtained by filtering Sample 1 through a 0.45 $\mu$m membrane were prepared. Each sample was placed in a 1 cm square cell and the absorbance was measured at a wavelength of 660 nm. From the measured absorbance, turbidity was determined by the following formula.

$$\text{Turbidity} = (\text{absorbance of Sample 1}) - (\text{absorbance of Sample 2})$$

[Table 5]

| | | Chitin oligosaccharide | Cello-oligosaccharide (1) |
|---|---|---|---|
| Immediately after preparation | Presence/ absence of turbidness | Absent | Absent |
| | Turbidity | 0 | 0 |
| After 7 days of storage | Presence/ absence of turbidness | Absent | Absent |
| | Turbidity | 0 | 0 |

From the results of Table 5, it can be understood that the chitin oligosaccharide and cello-oligosaccharide (1) did not generate turbidness even after storage for 7 days, and are particularly useful as spreading agents.

INDUSTRIAL APPLICABILITY

By using the spreading agent of the present invention, the adhesion of fertilizer components and agricultural chemicals to plants can be effectively enhanced.

## Claims

1. A spreading agent, comprising at least one oligosaccharide selected from the group consisting of chitin oligosaccharides, cello-oligosaccharides, and xylo-oligosaccharides.

2. The spreading agent according to claim 1, comprising a chitin oligosaccharide as the oligosaccharide, wherein the chitin oligosaccharide is a chitin oligosaccharide containing an $\alpha$-1,6-glycosidic bond in at least part of glycosidic bonds.

3. The spreading agent according to claim 2, wherein a ratio of the $\alpha$-1,6-glycosidic bond to all of polymer bonds included in the chitin oligosaccharide is 1 to 50%.

4. The spreading agent according to claim 2 or 3, wherein a number average molecular weight of the chitin oligosaccharide is 420 to 2050.

5. The spreading agent according to claim 1, comprising a cello-oligosaccharide as the oligosaccharide, wherein the cello-oligosaccharide is a cello-oligosaccharide containing an $\alpha$-1,6-glycosidic bond in at least part of glycosidic bonds.

6. The spreading agent according to claim 5, wherein a ratio of the $\alpha$-1,6-glycosidic bond to all of polymer bonds included in the cello-oligosaccharide is 1 to 50%.

7. The spreading agent according to claim 5 or 6, wherein a number average molecular weight of the cello-oligosaccharide is 340 to 1640.

8. The spreading agent according to any one of claims 1 to 7, comprising, as the oligosaccharide, two or more selected from the group consisting of chitin oligosaccharides, cello-oligosaccharides, and xylo-oligosaccharides.

9. The spreading agent according to claim 8, comprising, as the oligosaccharide, a chitin oligosaccharide and a cello-oligosaccharide.

10. The spreading agent according to claim 9, comprising, as the oligosaccharide, a chitin oligosaccharide, a cello-oligosaccharide, and a xylo-oligosaccharide.

11. The spreading agent according to claim 10, wherein as a ratio of each oligosaccharide relative to a total 100 mass% content of the chitin oligosaccharide, the cello-oligosaccharide, and the xylo-oligosaccharide, the chitin oligosaccharide has a ratio of 10 to 50 mass%, the cello-oligosaccharide has a ratio of 10 to 50 mass%, and the xylo-oligosaccharide has a ratio of 10 to 60 mass%.

12. A fertilizer composition, comprising at least one fertilizer component selected from the group consisting of nitrogen, phosphoric acid, and potassium, and the spreading agent according to any one of claims 1 to 11.

13. The fertilizer composition according to claim 12, wherein a total content of the at least one oligosaccharide selected from the group consisting of chitin oligosaccharides, cello-oligosaccharides, and xylo-oligosaccharides is 1 to 15 mass% relative to 100 mass% of the fertilizer composition.

14. An agricultural chemical composition, comprising at least one agricultural chemical selected from the group consisting of insecticides, acaricides, fungicides, herbicides, plant growth regulators, anti-lodging agents, and plant nutrients, and the spreading agent according to any one of claims 1 to 11.

15. The agricultural chemical composition according to claim 14, wherein a total content of the at least one oligosaccharide selected from the group consisting of chitin oligosaccharides, cello-oligosaccharides, and xylo-oligosaccharides is 1 to 15 mass% relative to 100 mass% of the agricultural chemical composition.

# FIG. 1

$^1$H-NMR SPECTRUM OF CHITIN OLIGOSACCHARIDE

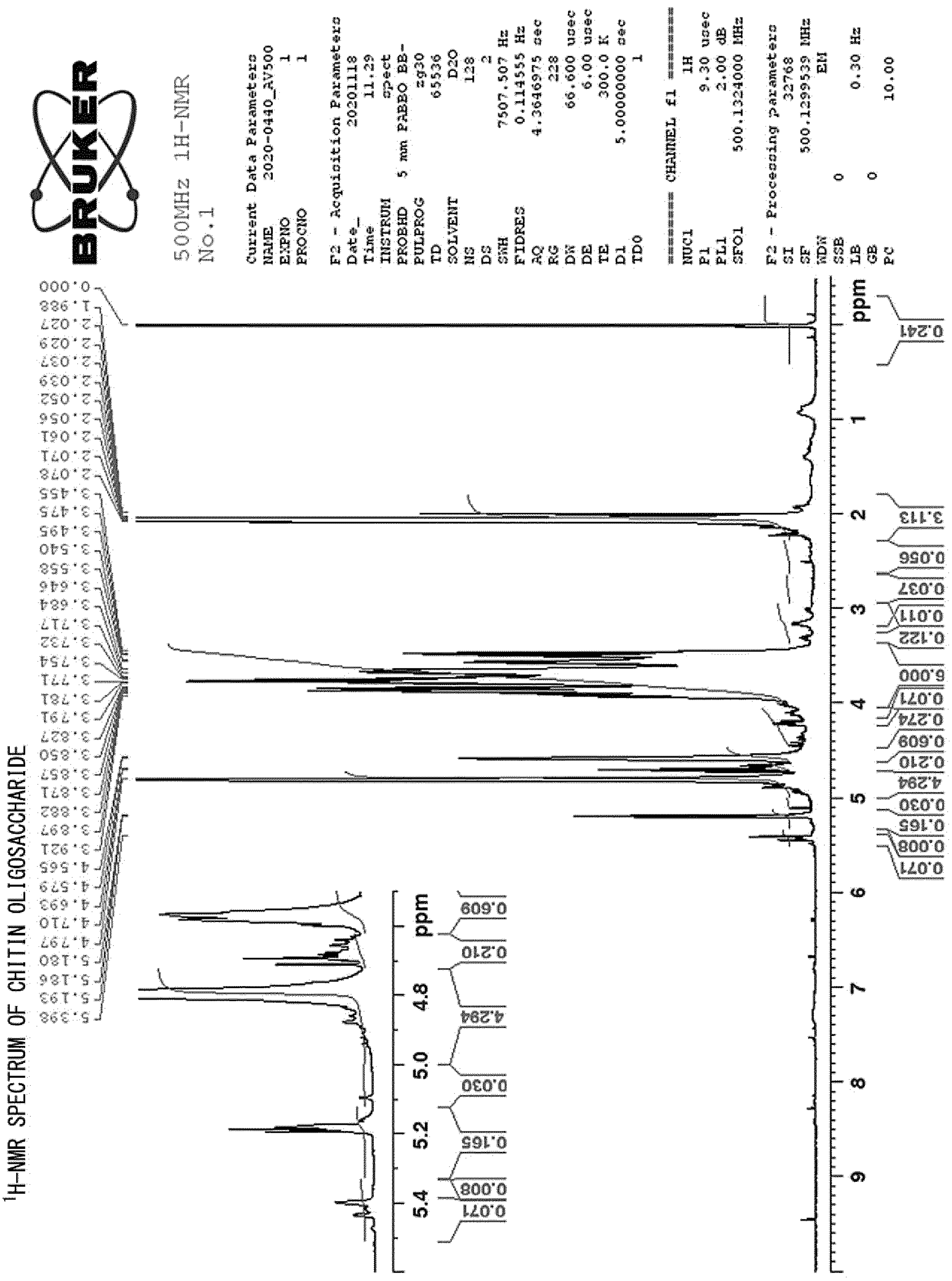

FIG. 2

$^1$H-NMR SPECTRUM OF CELLO-OLIGOSACCHARIDE (1)

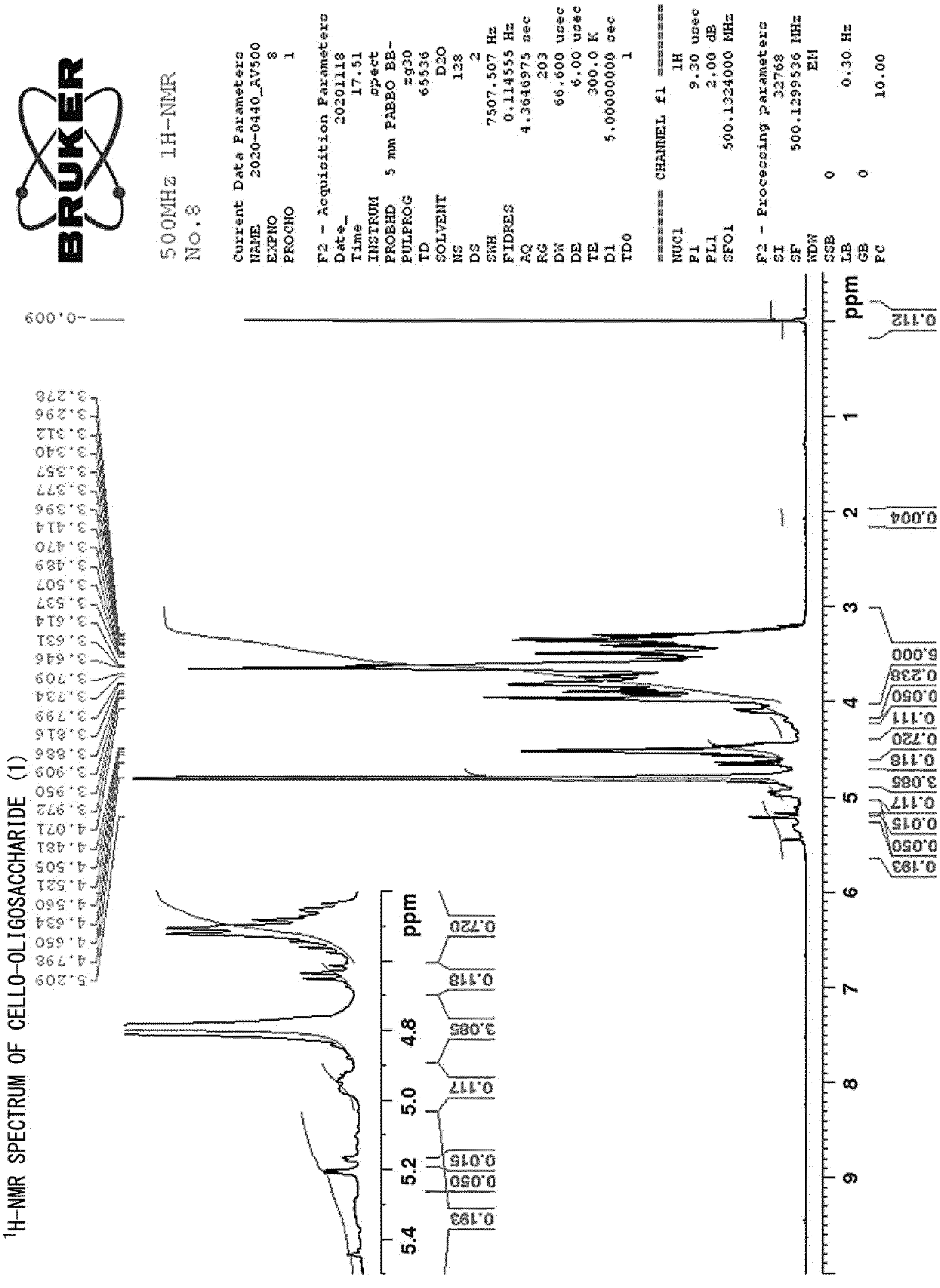

FIG. 3

$^{1}$H-NMR SPECTRUM OF CELLO-OLIGOSACCHARIDE (2)

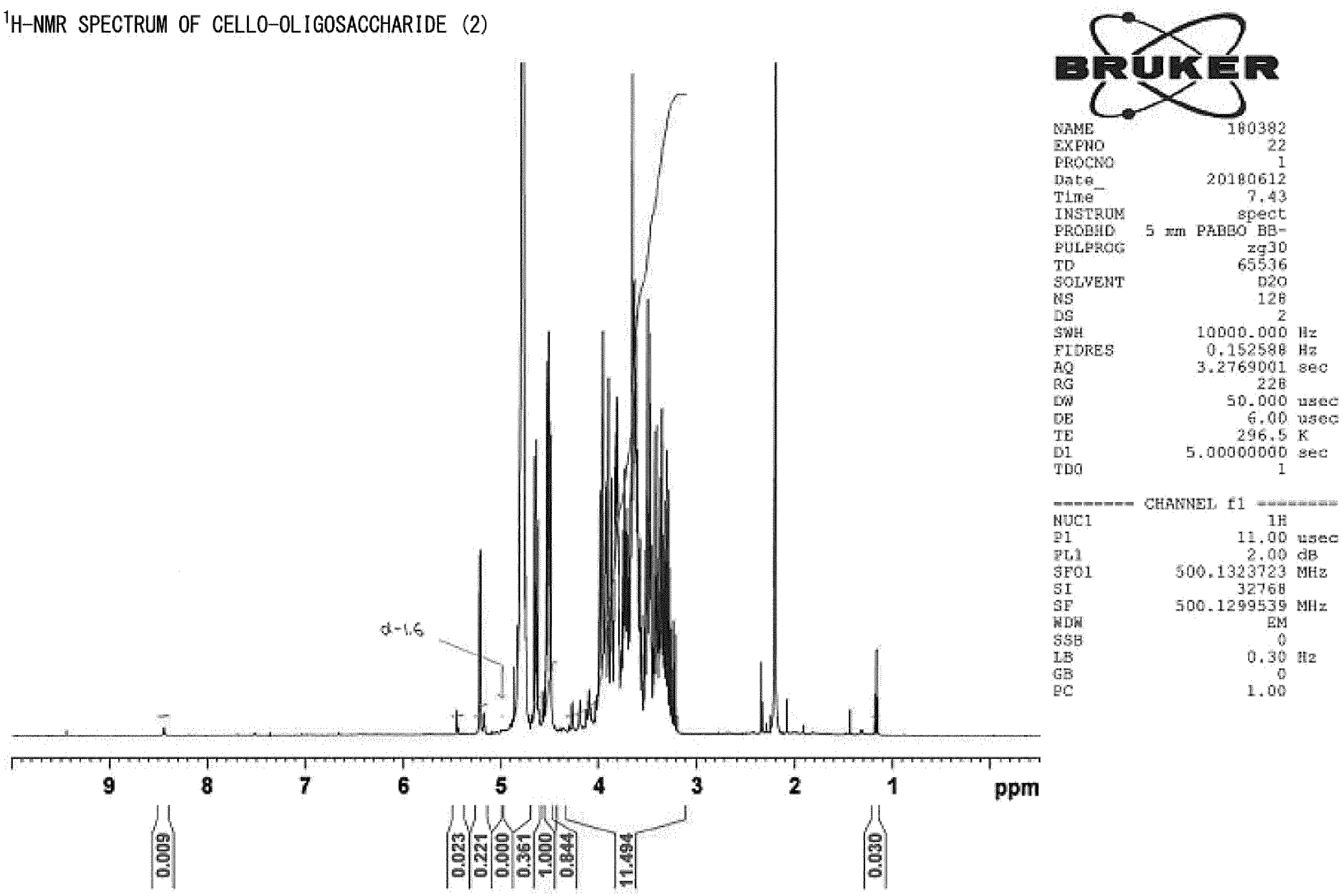

FIG. 4

| | SPINACH | CABBAGE |
|---|---|---|
| COMPARATIVE EXAMPLE 1 | 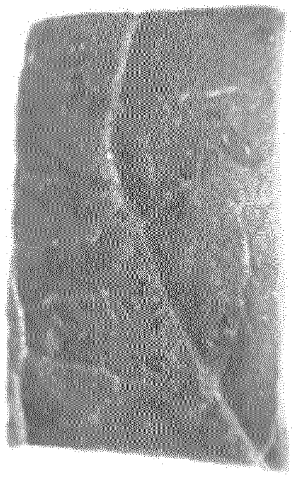 | 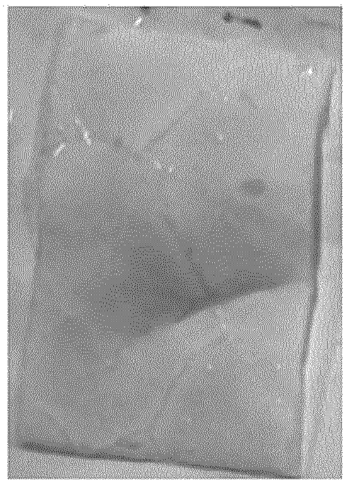 |
| EXAMPLE 5 | 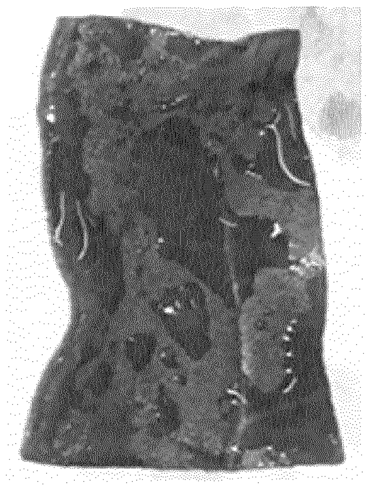 | 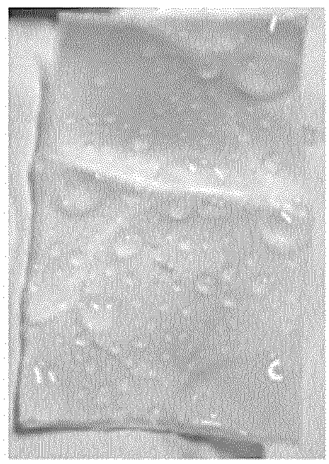 |

**INTERNATIONAL SEARCH REPORT**

International application No. **PCT/JP2022/010072**

**A. CLASSIFICATION OF SUBJECT MATTER**

***C09K 23/56***(2022.01)i; ***C05G 3/70***(2020.01)i
FI: C05G3/70; B01F17/56

According to International Patent Classification (IPC) or to both national classification and IPC

**B. FIELDS SEARCHED**

Minimum documentation searched (classification system followed by classification symbols)

C09K23/56; C05G3/70

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | WO 2020/255934 A1 (SHOWA DENKO KK) 24 December 2020 (2020-12-24)<br>paragraphs [0001], [0020], [0028]-[0029], claims 1-3, 8 | 1, 8-13<br>14-15<br>2-7 |
| X<br>Y<br>A | CN 103435414 A (YANGZHOU RIXING BIO-TECH CO., LTD.) 11 December 2013 (2013-12-11)<br>claims 1-3, paragraphs [0002], [0005]-[0008] | 1-4, 12-13<br>14-15<br>5-7 |
| Y | WO 2019/172381 A1 (KURARAY CO., LTD.) 12 September 2019 (2019-09-12)<br>claims, paragraphs [0035], [0037] | 14-15 |
| A | JP 2017-214368 A (SAKATA SEED CORP) 07 December 2017 (2017-12-07)<br>entire text | 1-15 |
| A | US 2020/0123075 A1 (SICHUAN UNIVERSITY) 23 April 2020 (2020-04-23)<br>entire text | 1-15 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **15 April 2022** | **10 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br>Telephone No. |

Form PCT/ISA/210 (second sheet) (January 2015)

**INTERNATIONAL SEARCH REPORT**

International application No.
**PCT/JP2022/010072**

| C. DOCUMENTS CONSIDERED TO BE RELEVANT | | |
|---|---|---|
| Category* | Citation of document, with indication, where appropriate, of the relevant passages | Relevant to claim No. |
| A | CN 105000994 A (SHANDONG TIANDA BIOLOGICAL CO., LTD.) 28 October 2015 (2015-10-28) entire text | 1-15 |
| A | JP 2001-302410 A (DAI ICHI KOGYO SEIYAKU CO LTD) 31 October 2001 (2001-10-31) entire text | 1-15 |

Form PCT/ISA/210 (second sheet) (January 2015)

**INTERNATIONAL SEARCH REPORT**
**Information on patent family members**

International application No.
**PCT/JP2022/010072**

| Patent document cited in search report | Publication date (day/month/year) | Patent family member(s) | Publication date (day/month/year) |
| --- | --- | --- | --- |
| WO 2020/255934 A1 | 24 December 2020 | TW 202107998 A | |
| CN 103435414 A | 11 December 2013 | (Family: none) | |
| WO 2019/172381 A1 | 12 September 2019 | US 2020/0396990 A1<br>paragraphs [0052], [0054], claims 1-10<br>EP 3763210 A1<br>CN 111801010 A<br>TW 201940066 A | |
| JP 2017-214368 A | 07 December 2017 | (Family: none) | |
| US 2020/0123075 A1 | 23 April 2020 | CN 109206225 A | |
| CN 105000994 A | 28 October 2015 | (Family: none) | |
| JP 2001-302410 A | 31 October 2001 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000001404 A
- JP 2015134704 A
- JP 2011528674 A
- JP 2012217396 A
- WO 2017104687 A


### Non-patent literature cited in the description


- *Plant Protection,* 2014, vol. 68 (11), 60-63